# FASCICULE DE BREVET EUROPEEN

(11) **EP 3 967 995 B1**
(45) Date de publication et mention de la délivrance du brevet: **03.05.2023**
(21) Numéro de dépôt: 21194632.2
(22) Date de dépôt: 02.09.2021
(51) Int. Cl.: G01K 13/02, G01K 7/18

(54) **CAPTEUR DE TEMPÈRATURE POUR UN CIRCUIT DE FLUIDE DE VÉHICULE AUTOMOBILE**
TEMPERATURSENSOR FÜR EINEN FLUIDKREISLAUF EINES KRAFTFAHRZEUGS
TEMPERATURE SENSOR FOR A FLUID CIRCUIT OF A MOTOR VEHICLE

(30) Priorité: 11.09.2020 FR 2009190
(43) Date de publication de la demande: 16.03.2022
(73) Titulaire: HUTCHINSON, 75008 Paris (FR)
(72) Inventeur: GABRIELLE, Brice, 45200 Montargis (FR); BENARD, Thierry, 45430 CHECY (FR)
(74) Mandataire: Gevers & Orès

(56) Documents cités:
- WO-A1-2010/142307
- FR-A1- 2 808 327
- US-A- 4 418 329
- US-B2- 9 939 340

## Description

### Domaine technique de l'invention

La présente invention concerne notamment un capteur de température pour un circuit de fluide, en particulier d'un véhicule automobile.

### Arrière-plan technique

Un véhicule, en particulier automobile, comprend plusieurs circuits de fluide dont la température doit être mesurée et contrôlée afin de vérifier en temps réel le bon fonctionnement du véhicule. C'est par exemple le cas d'un circuit de refroidissement ou d'admission d'air d'un véhicule automobile.

Il existe plusieurs technologies de capteurs de température. En particulier, on connait du document FR-A1 -2 808 327 un capteur de température comprenant un élément sensible conçu pour mesurer une température. Le capteur de température est configuré pour être fixé sur la paroi d'une conduite d'admission d'air d'un moteur à combustion interne de sorte que son élément sensible soit au contact du flux de fluide dont il faut mesurer la température. L'élément sensible est positionné dans une cavité délimitée par une fenêtre définie au milieu d'une cage s'enfonçant dans le conduit d'admission d'air de sorte que le flux de fluide traverse la cage par la fenêtre, entre en contact avec l'élément sensible avant de ressortir de la cavité. Le contact entre le flux d'air et l'élément sensible permet ainsi à ce dernier de mesurer la température du flux.

La cage et en particulier sa cavité vont cependant provoquer une perturbation de l'écoulement du flux et perturber ainsi le bon fonctionnement de la conduite d'admission d'air.

On connaît également par le document US-A-4,418,329 un capteur de température qui comprend plusieurs pièces réalisées dans des matériaux différents et qui est donc relativement complexe et coûteux à réaliser. La fiabilité de ce type de capteur n'est pas toujours optimale car l'élément sensible est logé dans une partie qui peut s'encrasser et est relié à des bornes par des moyens fragiles tels que des soudures.

La présente invention a notamment pour but de résoudre tout ou partie des problèmes précités.

### Résumé de l'invention

La présente invention concerne un capteur de température pour une conduite de fluide, en particulier pour un véhicule automobile, ce capteur comportant un corps en matière plastique ou composite comportant une première partie configurée pour être engagée dans ladite conduite et pour être au contact dudit fluide, et une seconde partie configurée pour être située à l'extérieur de la conduite, le corps comportant en outre au moins une patte de fixation configurée pour coopérer avec la conduite et assurer la fixation du capteur sur cette conduite, le capteur comportant en outre au moins un élément thermosensible situé sur la première partie du corps et relié à des bornes de raccordement électrique situées sur la seconde partie du corps, caractérisé en ce que la première partie du corps comprend une surface plane configurée pour être au contact du fluide et sur laquelle est située une piste formant ledit élément thermosensible, cette piste ayant une forme générale allongée et comportant des extrémités opposées reliées respectivement auxdites bornes par des conducteurs électriques noyés dans ledit corps.

Ainsi, en étant positionné sur une surface plane, la piste formant l'élément thermosensible ne perturbera pas ou peu l'écoulement du fluide dont il faut mesurer la température. Le capteur est par ailleurs simple à réaliser et permet d'optimiser le temps de transmission des signaux depuis la piste jusqu'aux bornes. Ce temps de transmission qui équivaut au temps de réponse du capteur peut être inférieur à 1s et par exemple de l'ordre de 0,5s.

Avantageusement, les première et seconde parties sont réalisées d'une seule pièce et la surface plane est située à une extrémité libre de la première partie du corps, qui est située à l'extérieur du corps pour être au contact du fluide.

On comprend ainsi que le capteur est relativement facile et économique à fabriquer. On comprend également que le risque d'encrassement du capteur est faible du fait qu'il est situé à l'extérieur du corps et donc apte à être balayé par le fluide en fonctionnement.

Par ailleurs, les conducteurs électriques noyés dans le corps s'étendent en continu depuis l'extrémité libre du corps où est situé l'élément sensible, jusqu'aux bornes, ce qui augmente la fiabilité du capteur.

Le capteur de température selon l'invention peut comprendre une ou plusieurs des caractéristiques suivantes, prises isolément les unes des autres ou en combinaison les unes avec les autres :
- la piste forme un serpentin ;
- la piste a une épaisseur inférieure ou égale à 20µm, et/ou une longueur supérieure ou égale à 1000µm, et/ou une largeur inférieure ou égale à 1000µm ;
- la surface est sensiblement circulaire ou rectangulaire ;
- la surface a une aire supérieure ou égale à 0,5cm² ;
- les conducteurs ont des extrémités qui affleurent ladite surface et qui sont recouvertes par lesdites extrémités de la piste ;
- la piste est formée par une encre imprimée ou transférée ;
- la piste et la surface sont recouvertes par une couche de passivation ; et
- la patte de fixation est configurée pour être fixée sur la conduite par encliquetage élastique, vissage, ou sertissage.

L'invention concerne aussi une conduite de fluide, en particulier pour un véhicule automobile, comportant un tuyau de circulation de fluide et un capteur tel que décrit précédemment, le capteur ayant sa première partie qui traverse un orifice du tuyau de façon à ce que ladite surface soit au contact du fluide circulant dans le tuyau.

La conduite selon l'invention peut comprendre une ou plusieurs des caractéristiques suivantes, prises isolément les unes des autres ou en combinaison les unes avec les autres :
-- la surface s'étend de manière tangentielle par rapport à une circonférence centrée sur un axe longitudinal du tuyau ;
   - la surface s'étend dans le prolongement axial d'une surface cylindrique interne du tuyau ; et
-- la surface s'étend de manière parallèle à un axe longitudinal du tuyau.

L'invention concerne aussi un véhicule, en particulier automobile, comportant au moins un capteur tel que défini précédemment ou au moins une conduite telle que définie précédemment.

L'invention concerne en outre un procédé de fabrication d'un capteur tel que défini précédemment.

Selon l'invention, le procédé comprend les étapes consistant à :
a) positionner des conducteurs électriques dans un moule,
b) injecter un matériau plastique ou composite dans le moule de façon à réaliser d'une seule pièce les première et seconde parties du corps et à ce que les conducteurs soient noyés dans ce matériau, les conducteurs s'étendant en continu depuis des bornes de raccordement électrique jusqu'à une surface plane du corps qui est située à l'extérieur et à une extrémité libre du corps,
c) déposer une piste thermosensible sur la surface et au contact des conducteurs.

Le procédé selon l'invention peut comprendre une ou plusieurs des caractéristiques suivantes, prises isolément les unes des autres ou en combinaison les unes avec les autres :
- la piste est déposée à l'étape c) par impression ou par transfert d'une encre.
- le procédé comprend une étape suivante d) de recouvrement de la piste et de la surface avec une couche de passivation.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective du capteur selon l'invention ;
[Fig.2] la figure 2 est une vue schématique en coupe longitudinale du capteur de la figure 1 ;
[Fig.3] la figure 3 est une vue schématique en coupe et en perspective du capteur selon l'invention ;
[Fig.4] la figure 4 est une vue schématique en perspective d'une variante de réalisation du capteur selon l'invention ;
[Fig.5] la figure 5 est une vue schématique en perspective d'une couche de passivation situé sur le capteur de l'invention ;
[Fig.6] la figure 6 est une vue schématique d'une conduite de fluide sur laquelle se trouve le capteur selon l'invention ;
[Fig.7] la figure 7 est une vue schématique d'une conduite de fluide sur laquelle se trouve le capteur de la figure 4.

### Description détaillée de l'invention

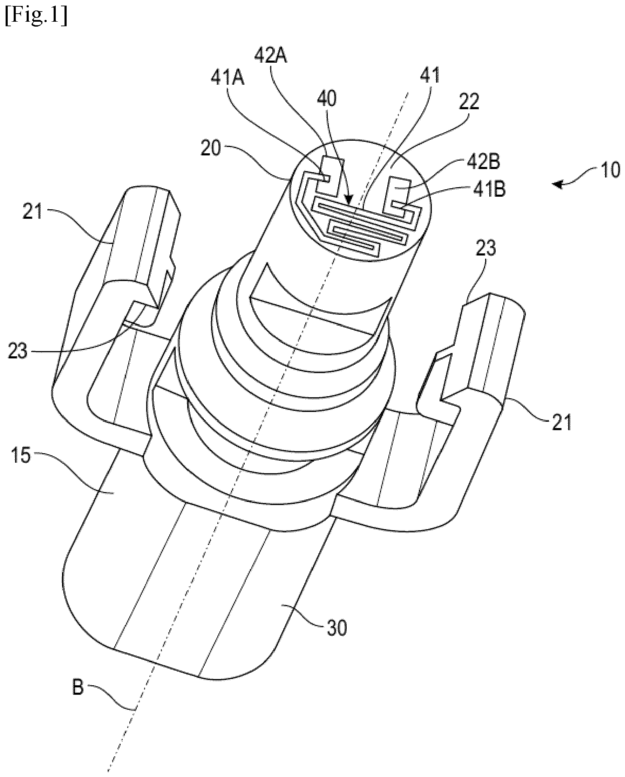

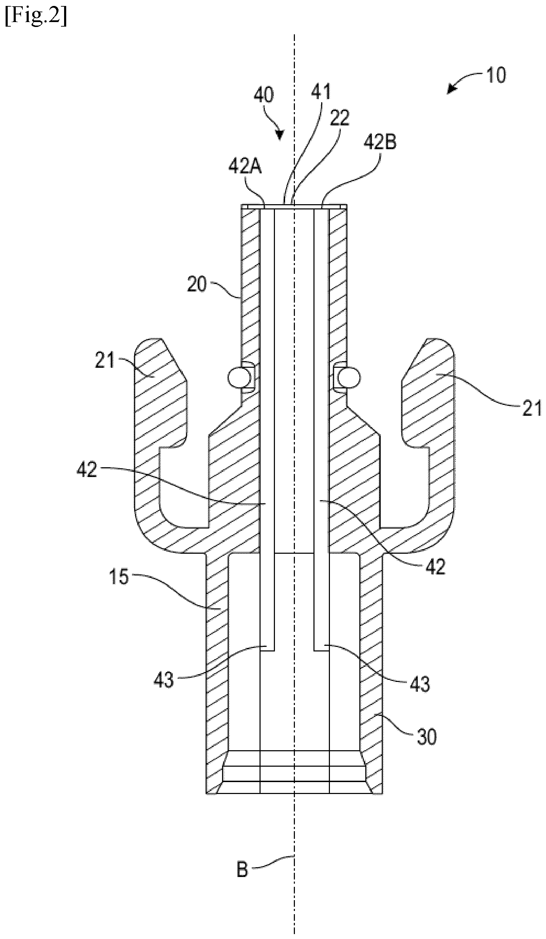

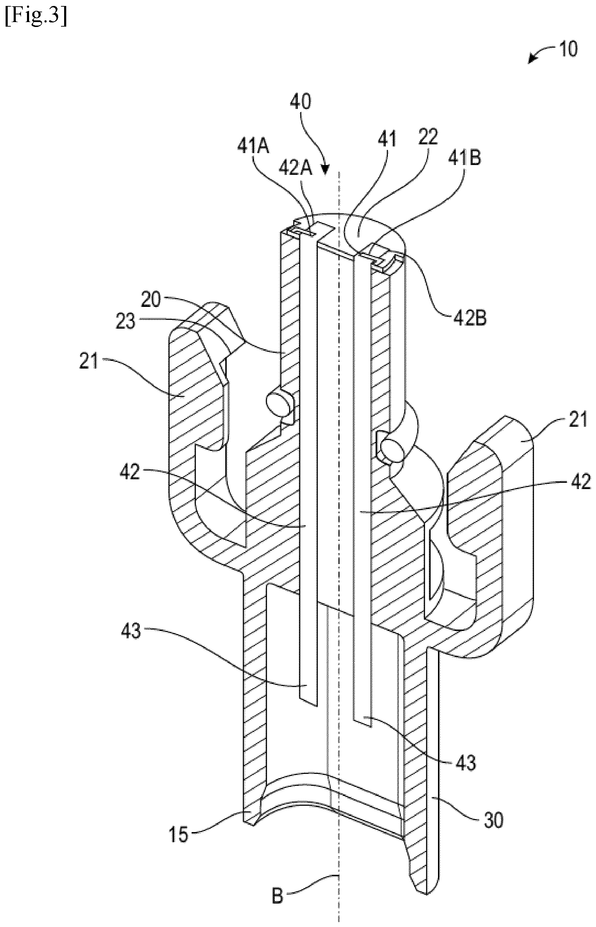

On se réfère d'abord aux figures 1 à 3 qui représentent un capteur de température 10 selon l'invention de manière très schématique.

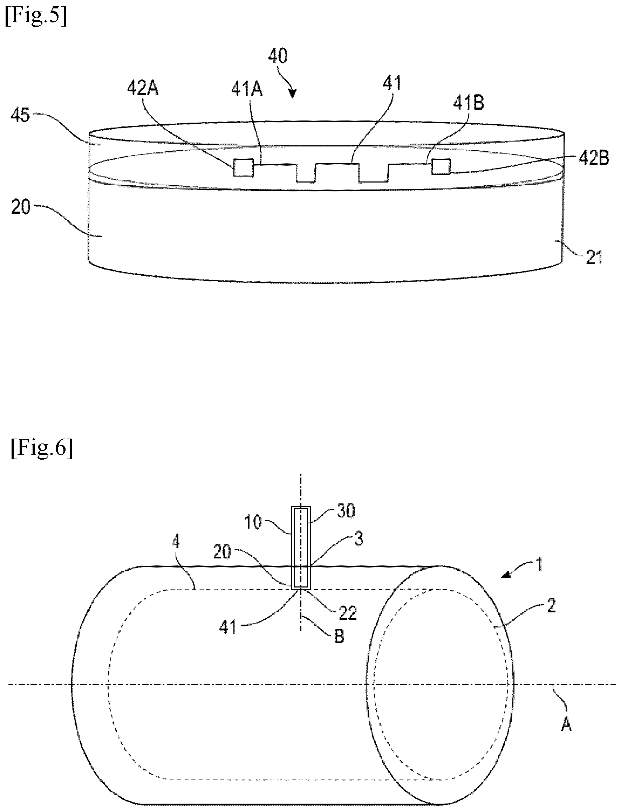

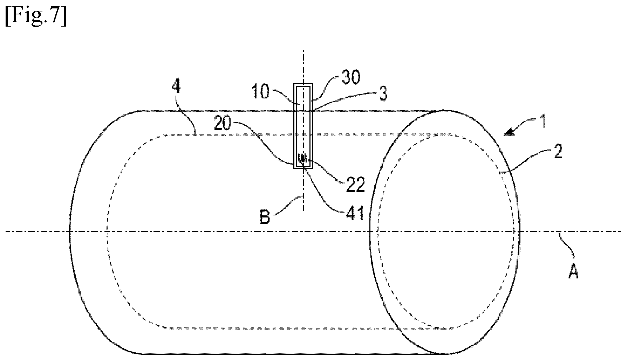

Le capteur 10 est destiné à équiper un circuit ou conduite de fluide (référence 1 sur les figures 6 et 7), en particulier d'un véhicule automobile, et par exemple un circuit de refroidissement.

Le capteur 10 comprend un corps 15 en matière plastique ou composite s'étendant longitudinalement selon un axe longitudinal B.

Le corps 15 comprend une première partie 20 configurée pour être engagée dans la conduite et pour être au contact du fluide. Cette première partie 20 s'étend longitudinalement selon l'axe longitudinal B et prend la forme d'un doigt.

Le corps 15 comprend également une seconde partie 30 configurée pour être située à l'extérieur de la conduite. Cette seconde partie 30 s'étend longitudinalement selon l'axe longitudinal B de manière opposée à la première partie 20.

Le corps 15 comporte en outre au moins une patte 21 de fixation, ici deux pattes de fixation 21, configurées pour coopérer avec la conduite et assurer la fixation du capteur 10 sur cette conduite.

Les pattes de fixation 21 sont ici configurées pour être fixées sur la conduite par encliquetage élastique mais pourraient aussi être configurées pour être fixées sur la conduite par vissage, ou sertissage.

Les pattes 21 comprennent pour cela des dents 23 configurées pour s'accrocher sur la conduite par encliquetage élastique.

L'encliquetage élastique a l'avantage de permettre un bon positionnement du capteur 10 par rapport à l'écoulement du fluide.

Le capteur 10 comporte également au moins un élément thermosensible 40 situé sur la première partie 20 du corps 15 et relié à des bornes 43 de raccordement électrique situées sur la seconde partie 30 du corps 15.

La première partie 20 du corps 15 comprend une surface plane 22 configurée pour être au contact du fluide et sur laquelle est située une piste 41 formant l'élément thermosensible 40.

Ainsi, la forme plane de la surface 22 modifie peu l'écoulement du fluide.

La surface 22 est par exemple sensiblement circulaire ou rectangulaire.

La surface 22 a une aire supérieure ou égale à 0,5cm².

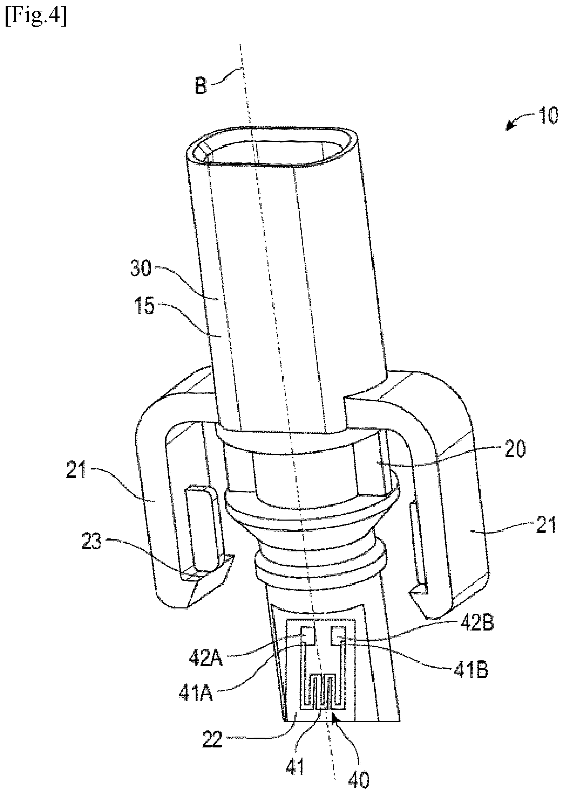

Dans la variante de réalisation illustrée sur les figures 1 à 3, la surface 22 est perpendiculaire à l'axe longitudinal B. En revanche, dans la variante de réalisation de l'invention illustrée à la figure 4, la surface 22 est parallèle à l'axe longitudinal B.

La piste 41 a une forme générale allongée et comporte des extrémités opposées 41A, 41B reliées respectivement aux bornes 43 par des conducteurs électriques 42 noyés dans le corps 15. La piste peut ainsi transmettre un signal électrique représentatif de la température aux bornes 43 par l'intermédiaire des conducteurs 42. Un appareil d'exploitation (non représenté) pourra alors récupérer et exploiter l'information.

La piste 41 forme par exemple un serpentin.

La piste 41 a notamment une épaisseur inférieure ou égale à 20µm, et/ou une longueur supérieure ou égale à 1000µm, et/ou une largeur inférieure ou égale à 1000µm.

Les conducteurs 42 ont des extrémités 42A, 42B qui affleurent la surface 22 et qui sont recouvertes par les extrémités 41A, 41B de la piste 41.

La piste 41 est formée par une encre imprimée ou transférée.

Comme visible sur la figure 5, la piste 41 et la surface 22 sont recouvertes par une couche de passivation 45.

La fonction de la couche de passivation est de protéger la piste 41 de l'agression de l'environnement extérieur. Par agression de l'environnement extérieur on entend : agression chimique (humidité, température, fluides agressifs) qui pourrait détériorer chimiquement l'encre et agression mécanique (choc, abrasion) qui pourrait détériorer mécaniquement l'encre.

Afin d'améliorer l'aérodynamisme il est possible d'arrondir les angles et les surfaces de tous les éléments du capteur destinés à être au contact du fluide. Comme visible sur les figures 6 et 7, la conduite 1 de fluide, comporte un tuyau 2 de circulation de fluide et un capteur 10 tel que décrit précédemment.

Le capteur 10 a sa première partie 20 qui traverse un orifice 3 du tuyau 2 de façon à ce que la surface 22 soit au contact du fluide circulant dans le tuyau 2.

Comme représenté sur la figure 6, la surface 22 s'étend de manière tangentielle par rapport à une circonférence centrée sur un axe longitudinal A du tuyau 2. Il s'agit de la variante de réalisation du capteur 10 représentée aux figures 1 à 3. La surface 22 s'étend ici dans le prolongement axial d'une surface cylindrique interne 4 du tuyau 2. La surface 22 affleure donc ici le fluide en ne perturbe pas son écoulement.

Selon une variante de réalisation de l'invention visible à la figure 7, la surface 22 peut s'étendre dans un plan parallèle à l'axe longitudinal A du tuyau 2. Il s'agit de la variante de réalisation du capteur 10 illustré à la figure 4. La surface 22 s'étend parallèlement à l'écoulement du fluide ne le perturbe que très peu. Les deux variantes illustrées de l'invention permettent ainsi de limiter au maximum la perturbation du fluide circulant à l'intérieur de la conduite 1. L'invention concerne aussi un véhicule, en particulier automobile, comportant au moins un capteur 10 tel que décrit précédemment ou au moins une conduite 1 telle que décrite précédemment.

L'invention concerne en outre un procédé de fabrication d'un capteur 10 tel que décrit précédemment.

Le procédé comprend les étapes suivantes consistant à :
a) positionner les conducteurs électriques 42 dans un moule,
b) injecter un matériau plastique ou composite dans le moule de façon à réaliser le corps 15 et à ce que les conducteurs 42 soient noyés dans ce matériau, les conducteurs 42 s'étendant jusqu'à la surface plane 22 du corps 15,
c) déposer une piste thermosensible 41 sur la surface 22 et au contact des conducteurs 42.

Les conducteurs 22 sont ainsi positionnés dans le moule avant l'injection de la matière plastique ce qui permet notamment d'avoir une structure interne simple et facilite les étapes de fabrication du capteur 10.

La piste 41 est par exemple déposée à l'étape c) par impression ou par transfert d'une encre.

Le transfert peut par exemple se faire par l'intermédiaire d'une feuille de transfert, pouvant également jouer le rôle de couche de passivation.

Le procédé comprend notamment une étape suivante d) de recouvrement de la piste 41 et de la surface 22 avec la couche de passivation 45.

## Revendications

1. Capteur (10) de température pour une conduite de fluide (1), en particulier pour un véhicule automobile, ce capteur (10) comportant un corps (15) en matière plastique ou composite comportant une première partie (20) configurée pour être engagée dans ladite conduite (1) et pour être au contact dudit fluide, et une seconde partie (30) configurée pour être située à l'extérieur de la conduite (1), le corps (15) comportant en outre au moins une patte (21) de fixation configurée pour coopérer avec la conduite (1) et assurer la fixation du capteur (10) sur cette conduite (1), le capteur (10) comportant en outre au moins un élément thermosensible (40) situé sur la première partie (20) du corps (15) et relié à des bornes (43) de raccordement électrique situées sur la seconde partie (30) du corps (15), **caractérisé en ce que** les premières et seconde parties (20, 30) sont réalisées d'une seule pièce et la première partie (20) du corps (15) comprend à une extrémité libre une surface plane (22) qui est située à l'extérieur du corps pour être au contact du fluide et sur laquelle est située une piste (41) formant ledit élément thermosensible (40), cette piste (41) ayant une forme générale allongée et comportant des extrémités opposées (41A, 41B) reliées respectivement auxdites bornes (43) par des conducteurs électriques (42) noyés dans ledit corps (15) et s'étendant en continu depuis ladite extrémité libre jusqu'aux bornes (43).

2. Capteur (10) selon la revendication 1, dans lequel la piste (41) forme un serpentin.

3. Capteur (10) selon la revendication 1 ou 2, dans lequel la piste (41) a une épaisseur inférieure ou égale à 20µm, et/ou une longueur supérieure ou égale à 1000µm, et/ou une largeur inférieure ou égale à 1000µm.

4. Capteur (10) selon l'une des revendications précédentes, dans lequel la surface (22) est sensiblement circulaire ou rectangulaire.

5. Capteur (10) selon l'une des revendications précédentes, dans lequel la surface (22) a une aire supérieure ou égale à 0,5cm².

6. Capteur (10) selon l'une des revendications précédentes, dans lequel les conducteurs (42) ont des extrémités (42A, 42B) qui affleurent ladite surface (22) et qui sont recouvertes par lesdites extrémités (41A, 41B) de la piste (41).

7. Capteur (10) selon l'une des revendications précédentes, dans lequel la piste (41) est formée par une encre imprimée ou transférée.

8. Capteur (10) selon l'une des revendications précédentes, dans lequel la piste (41) et la surface (22) sont recouvertes par une couche de passivation (45).

9. Capteur (10) l'une des revendications précédentes, dans lequel la patte de fixation (21) est configurée pour être fixée sur la conduite (1) par encliquetage élastique, vissage, ou sertissage.

10. Conduite (1) de fluide, en particulier pour un véhicule automobile, comportant un tuyau (2) de circulation de fluide et un capteur (10) selon l'une des revendications précédentes, le capteur (10) ayant sa première partie (20) qui traverse un orifice (3) du tuyau (2) de façon à ce que ladite surface (22) soit au contact du fluide circulant dans le tuyau (2).

11. Conduite (1) selon la revendication précédente, dans laquelle la surface (22) s'étend dans le prolongement axial d'une surface cylindrique interne du tuyau (2).

12. Véhicule, en particulier automobile, comportant au moins un capteur (10) selon l'une des revendications 1 à 9 ou au moins une conduite (1) selon la revendication 10 ou 11.

13. Procédé de fabrication d'un capteur (10) selon l'une des revendications 1 à 9, **caractérisé en ce qu'**il comprend les étapes consistant à :
a) positionner des conducteurs électriques (42) dans un moule,
b) injecter un matériau plastique ou composite dans le moule de façon à réaliser d'une seule pièce les première et seconde parties (20, 30) du corps (15) et à ce que les conducteurs (42) soient noyés dans ce matériau, les conducteurs (42) s'étendant en continu depuis des bornes (43) de raccordement électrique jusqu'à une surface plane (22) du corps (15) qui est située à l'extérieur et à une extrémité libre du corps,
c) déposer une piste thermosensible (41) sur la surface (22) et au contact des conducteurs (42).

14. Procédé selon la revendication 13, dans lequel la piste (41) est déposée à l'étape c) par impression ou par transfert d'une encre.

15. Procédé selon la revendication 13 ou 14, dans lequel il comprend une étape suivante d) de recouvrement de la piste (41) et de la surface (22) avec une couche (45) de passivation.

## Patentansprüche

1. Temperatursensor (10) für eine Fluidleitung (1), insbesondere für ein Kraftfahrzeug, wobei der Sensor (10) einen Körper (15) aus Kunststoff- oder Verbundmaterial umfasst, umfassend ein erstes Teil (20), konfiguriert, um in der Leitung (1) in Eingriff gebracht zu werden und um in Kontakt mit dem Fluid vorzuliegen, und ein zweites Teil (30), konfiguriert, um an der Außenseite der Leitung (1) angeordnet zu sein, wobei der Körper (15) des Weiteren mindestens eine Befestigungsklammer (21) umfasst, konfiguriert, um mit der Leitung (1) zusammenzuwirken und die Befestigung des Sensors (10) an dieser Leitung (1) sicherzustellen, wobei der Sensor (10) des Weiteren mindestens ein wärmeempfindliches Element (40), angeordnet an dem ersten Teil (20) des Körpers (15) und verbunden mit den an dem zweiten Teil (30) des Körpers (15) angeordneten elektrischen Anschlussklemmen (43) umfasst, **dadurch gekennzeichnet, dass** das erste und zweite Teil (20, 30) aus einem einzigen Stück gefertigt sind und das erste Teil (20) des Körpers (15) an einem freien Ende eine flache Oberfläche (22) beinhaltet, die an der Außenseite des Körpers angeordnet ist, um in Kontakt mit dem Fluid vorzuliegen, und auf der eine Bahn (41) angeordnet ist, die das wärmeempfindliche Element (40) bildet, wobei diese Bahn (41) eine allgemein längliche Form aufweist und gegenüberliegende Enden (41A, 41B) umfasst, die jeweils mit den Klemmen (43) durch in den Körper (15) eingebettete elektrische Leiter (42) verbunden sind, und sich ab dem freien Ende kontinuierlich bis zu den Klemmen (43) erstrecken.

2. Sensor (10) nach Anspruch 1, wobei die Bahn (41) eine Rohrschlange bildet.

3. Sensor (10) nach Anspruch 1 oder 2, wobei die Bahn (41) eine Dicke kleiner als oder gleich 20 µm und/oder eine Länge größer als oder gleich 1000 µm und/oder eine Breite kleiner als oder gleich 1000 µm aufweist.

4. Sensor (10) nach einem der vorstehenden Ansprüche, wobei die Oberfläche (22) im Wesentlichen kreisförmig oder rechteckig ist.

5. Sensor (10) nach einem der vorstehenden Ansprüche, wobei die Oberfläche (22) einen Flächeninhalt größer als oder gleich 0,5 cm² aufweist.

6. Sensor (10) nach einem der vorstehenden Ansprüche, wobei die Leiter (42) Enden (42A, 42B) aufweisen, die mit der Oberfläche (22) bündig sind und die von den Enden (41A, 41B) der Bahn (41) bedeckt sind.

7. Sensor (10) nach einem der vorstehenden Ansprüche, wobei die Bahn (41) aus einer gedruckten oder übertragenen Tinte gebildet ist.

8. Sensor (10) nach einem der vorstehenden Ansprüche, wobei die Bahn (41) und die Oberfläche (22) von einer Passivierungsschicht (45) bedeckt sind.

9. Sensor (10) nach einem der vorstehenden Ansprüche, wobei die Befestigungsklammer (21) konfiguriert ist, um an der Leitung (1) durch elastisches Einrasten, Verschrauben oder Verpressen befestigt ist.

10. Fluidleitung (1), insbesondere für ein Kraftfahrzeug, umfassend ein Fluidzirkulationsrohr (2) und einen Sensor (10) nach einem der vorstehenden Ansprüche, wobei der Sensor (10) sein erstes Teil (20) aufweist, das eine Öffnung (3) des Rohrs (2) derart durchquert, dass die Oberfläche (22) in Kontakt mit dem in dem Rohr (2) zirkulierenden Fluid vorliegt.

11. Leitung (1) nach dem vorstehenden Anspruch, wobei die Oberfläche (22) sich in der axialen Verlängerung einer internen zylindrischen Oberfläche des Rohrs (2) erstreckt.

12. Fahrzeug, insbesondere Automobil, umfassend mindestens einen Sensor (10) nach einem der Ansprüche 1 bis 9 oder mindestens eine Leitung (1) nach Anspruch 10 oder 11.

13. Verfahren zur Herstellung eines Sensors (10) nach einem der Ansprüche 1 bis 9, **dadurch gekennzeichnet, dass** es die Schritte beinhaltet bestehend aus:
a) Positionieren der elektrischen Leiter (42) in einem Modul,
b) Injizieren von Kunststoff- oder Verbundmaterial in das Modul derart, um das erste und zweite Teil (20, 30) des Körpers (15) aus einem einzelnen Stück zu fertigen und damit die Leiter (42) in diesem Material eingebettet werden, wobei die Leiter (42) sich ab den elektrischen Anschlussklemmen (43) kontinuierlich bis zu einer flachen Oberfläche (22) des Körpers (15) erstrecken, die an der Außenseite und an einem freien Ende des Körpers angeordnet ist,
c) Abscheiden einer wärmeempfindlichen Bahn (41) auf die Oberfläche (22) und in Kontakt mit den Leitern (42).

14. Verfahren nach Anspruch 13, wobei die Bahn (41) in Schritt c) durch Aufdruck oder Übertragung einer Tinte abgeschieden wird.

15. Verfahren nach Anspruch 13 oder 14, wobei es einen folgenden Schritt d) der Bedeckung der Bahn (41) und der Oberfläche (22) mit einer Passivierungsschicht (45) beinhaltet.

## Claims

1. A temperature sensor (10) for a fluid pipe (1), in particular for a motor vehicle, this sensor (10) comprising a body (15) made of plastic or composite material comprising a first part (20) configured to be engaged in said pipe (1) and to be in contact with said fluid, and a second part (30) configured to be located outside the pipe (1), the body (15) further comprising at least one fixing bracket (21) configured to cooperate with the pipe (1) and to ensure the fixing of the sensor (10) on this pipe (1), the sensor (10) further comprising at least one thermosensitive element (40) located on the first part (20) of the body (15) and connected to electrical connection terminals (43) located on the second part (30) of the body (15), **characterized in that** the first and second parts (20, 30) are made in one piece and the first part (20) of the body (15) comprises at a free end a flat surface (22) which is located outside the body so as to be in contact with the fluid and on which is located a track (41) forming said thermosensitive element (40), this track (41) having a generally elongated shape and comprising opposite ends (41A, 41B) connected respectively to said terminals (43) by electrical conductors (42) embedded in said body (15) and extending continuously from said free end to the terminals (43).

2. The sensor (10) according to claim 1, wherein the track (41) forms a serpentine.

3. The sensor (10) according to claim 1 or 2, wherein the track (41) has a thickness of less than or equal to 20µm, and/or a length of greater than or equal to 1000pm, and/or a width of less than or equal to 1000µm.

4. The sensor (10) according to any of the preceding claims, wherein the surface (22) is substantially circular or rectangular.

5. The sensor (10) according to any of the preceding claims, wherein the surface (22) has a surface area greater than or equal to 0.5cm².

6. The sensor (10) according to any of the preceding claims, wherein the conductors (42) have ends (42A, 42B) which are flush with said surface (22) and which are covered by said ends (41A, 41B) of the track (41).

7. The sensor (10) according to any of the preceding claims, wherein the track (41) is formed by a printed or transferred ink.

8. The sensor (10) according to any of the preceding claims, wherein the track (41) and the surface (22) are covered by a passivation layer (45).

9. The sensor (10) according to any one of the preceding claims, wherein the fixing bracket (21) is configured to be fixed to the pipe (1) by elastic snap-fit, screwing, or crimping.

10. A fluid pipe (1), in particular for a motor vehicle, comprising a fluid circulation hose (2) and a sensor (10) according to one of the preceding claims, the sensor (10) having its first part (20) passing through an orifice (3) of the hose (2) so that said surface (22) is in contact with the fluid circulating in the hose (2).

11. The pipe (1) according to the preceding claim, wherein the surface (22) extends in axial extension of an inner cylindrical surface of the hose (2).

12. A vehicle, in particular motor vehicle, comprising at least one sensor (10) according to one of claims 1 to 9 or at least one pipe (1) according to claim 10 or 11.

13. A method for manufacturing a sensor (10) according to any of claims 1 to 9, **characterized in that** it comprises the steps of:
a) positioning electrical conductors (42) in a mold,
b) injecting a plastic or composite material into the mold so that the first and second parts (20, 30) of the body (15) are made in one piece and the conductors (42) are embedded in this material, the conductors (42) extending continuously from electrical connection terminals (43) to a flat surface (22) of the body (15) which is located outside and at a free end of the body,
c) applying a thermosensitive track (41) on the surface (22) and in contact with the conductors (42).

14. The method according to claim 13, wherein the track (41) is deposited in the step c) by printing or by transferring an ink.

15. The method according to claim 13 or 14, wherein it comprises a subsequent step d) of covering the track (41) and the surface (22) with a passivation layer (45).
